## Europäisches Patentamt

## European Patent Office

## Office européen des brevets

(11) Publication number: **0 114 978**

**A1**

# (12) EUROPEAN PATENT APPLICATION

(21) Application number: **83112035.7**

(22) Date of filing: **30.11.83**

(51) Int. Cl.³: **G 01 T 1/29**

(30) Priority: **03.12.82 JP 212236/82**

(43) Date of publication of application:
**08.08.84 Bulletin 84/32**

(84) Designated Contracting States:
**DE FR NL**

(71) Applicant: **FUJI PHOTO FILM CO., LTD.**
**210 Nakanuma Minami Ashigara-shi**
**Kanagawa 250-01(JP)**

(72) Inventor: **Ohgoda, Makoto c/o Fuji Photo Film Co., Ltd.**
**798 Miyanodai Kaisei-machi**
**Ashigarakami-gun Kanagawa-ken(JP)**

(72) Inventor: **Komaki, Takao c/o Fuji Photo Film Co., Ltd.**
**798 Miyanodai Kaisei-machi**
**Ashigarakami-gun Kanagawa-ken(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **High-speed image recording apparatus using stimulable phosphor sheets.**

(57) A high-speed image recording apparatus comprises a first sheet receiving section (2) for receiving unused stimulable phosphor sheets (5a, 5b, 5c), a second sheet receiving section (3) for receiving stimulable phosphor sheets carrying X-ray images stored therein (5a', 5b'), and a conveying mechanism for quickly conveying the stimulable phosphor sheets one by one to and out of an image recording position. A movable grid (4) is provided in the image recording position so as to intervene between the stimulable phosphor sheet (5) and an object (20). There is also provided a means for moving the movable grid with respect to the stimulable phosphor sheet in parallel thereto in synchronization with the exposure of the stimulable phosphor sheet to X-rays passing through the object, thereby to prevent fringes corresponding to foil members of the grid from being recorded in the stimulable phosphor sheet.

F I G.2

BACKGROUND OF THE INVENTION

### Field of the Invention

This invention relates to a high-speed image recording apparatus used for recording X-ray transmission images of objects in stimulable phosphor sheets by sequentially projecting the X-ray transmission images onto the stimulable phosphor sheets.

### Description of the Prior Art

There are generally used high-speed image recording apparatuses for recording radiation images in X-ray films. The typical high-speed image recording apparatus comprises a first film receiving section for receiving unexposed X-ray films, a conveying mechanism for sequentially conveying the X-ray films at high speeds from the first film receiving section to an image recording position wherein the X-ray films are exposed one by one to X-rays passing through objects, and for sequentially conveying the X-ray films at high speeds from the image recording position after the X-ray films are exposed to X-rays, and a second film receiving section for receiving the X-ray films conveyed at high speeds from the image recording position. The object is positioned on the image recording apparatus. The image recording apparatus constructed in this manner is generally called a film changer. In this apparatus, two intensifying screens are positioned in advance so as to sandwich the X-ray film in the image recording position. In another type of the high-speed image recording apparatus, instead of positioning the intensifying screens in the image recording position, two intensifying screens and an X-ray film sandwiched therebetween are housed in a cassette, and the cassette is conveyed in the apparatus. The apparatus of this type is ca-led a cassette changer.

When certain kinds of phosphors are exposed to a radiation such as X-rays, $\alpha$-rays, $\beta$-rays, $\gamma$-rays or ultraviolet rays, they store a part of the energy of the radiation. Then, when the phosphor which has been exposed to the radiation is exposed to stimulating rays such as visible light, light is emitted from the phosphor in proportion to the stored energy of the radiation. A phosphor exhibiting such properties is referred to as a stimulable phosphor.

As disclosed in U.S. Patent No. 4,258,264 and Japanese Unexamined Patent Publication No. 56(1981)-11395, it has been proposed to use a stimulable phosphor in a radiation image recording and reproducing system. Specifically, a sheet provided with a layer of the stimulable phosphor (hereinafter referred to as a stimulable phosphor sheet or simply as a sheet) is first exposed to a radiation passing through an object to have a radiation image stored therein, and is then scanned with stimulating rays such as a laser beam which cause it to emit light in the pattern of the stored image. The light emitted from the stimulable phosphor sheet upon stimulation thereof is photoelectrically detected and converted to an electric image signal, which is processed as desired to reproduce a visible image on a recording medium such as a photographic light-sensitive material or on a display device such as a cathode ray tube (CRT).

This radiation image recording and reproducing system using the stimulable phosphor sheet is advantageous over conventional radiography using an X-ray film and intensifying screens in that the image can be recorded over a very wide range (latitude) of radiation exposure and further in that the electric signal used for reproducing the visible image can be freely processed to improve the image quality for viewing, particularly for diagnostic purposes. In more detail, since the amount of light emitted upon stimulation after the radiation energy is stored in the phosphor varies over a very wide range in proportion to the amount of energy stored therein, it is possible to obtain an image having desired density regardless of the amount of exposure of the phosphor to the radiation by reading out the emitted light with an appropriate read-out gain and converting it to an electric signal to reproduce a visible image on a recording medium or a display device. The electric signal may further be processed as desired to obtain a radiation image suitable for viewing, particularly for diagnostic purposes. This is very advantageous in practical use.

Also in the aforesaid radiation image recording and reproducing system using the stimulable phosphor sheet, if such a high-speed image recording apparatus as used in the conventional radiography could be employed, it would become possible to quickly record many radiation images having an improved image quality, particularly a high diagnostic efficiency and accuracy. This would be very advantageous for medical diagnosis.

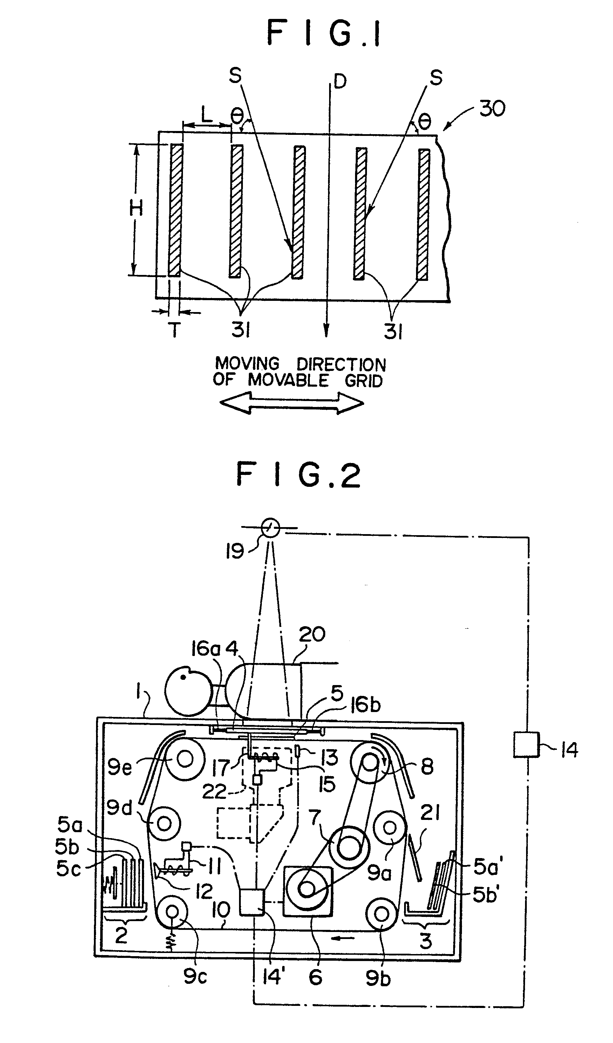

In the film changer and the cassette changer as described above, in order to prevent the X-rays scattered by an object from impinging upon the film and the intensifying screens, a stationary grid is inserted between the object and the combination of the film with the intensifying screens. The scattered X-rays cause a disturbance of the image information obtained by the direct X-rays. Therefore, when the scattered X-rays impinge upon the film and the intensifying screens, it becomes impossible to obtain a sharp image. Namely, in order to improve the sharpness of the images, it is necessary to eliminate the scattered X-rays by use of the aforesaid stationary grid or the like. Figure 1 is a sectional view showing the stationary grid. In Figure 1, a stationary grid 30 comprises foil members 31 normally made of a thin lead material or the like and arranged in parallel to one another or in the form of a grating. The thickness T of each foil member is within the range of about 0.02mm to about 0.07mm, and the space between the foil members is within the range of about 0.1mm to 0.4mm. The height H of the foil members is, for example, four, eight, 12 or 16 times the space L between the foil members.

However, when the conventional film changer or the conventional cassette changer as described above is used for recording a radiation image by use of a stimulable phosphor sheet, fine fringes corresponding to the foil members of the aforesaid stationary grid are projected onto the stimulable phosphor sheet together with the X-ray transmission image to be recorded in the stimulable phosphor sheet. Since the fringes are very fine, they scarcely present visual problems in conventional radiography using the X-ray film and the intensifying screens. However, in the radiation image recording and reproducing system using the stimulable phosphor sheet, when an image stored in the stimulable phosphor sheet is read out by use of a radiation image read-out a-paratus, there are generated moiré fringes having a space determined depending on the relationship between the spatial frequency of the aforesaid fringes due to the foil members of the stationary grid and the spatial frequency of the read-out scanning lines (i.e. the sampling frequency). Therefore, adverse visual effects are generated by the moiré fringes. The moiré fringes present a very real problem particularly in a subtraction processing method using the stimulable phosphor sheets as described in Japanese Unexamined Patent Publication Nos. 58(1983)-163338 (U.S.S.N. 477,571), 58(1983)-163339 and 58(1983)-163340 (U.S.S.N. 477,542). In the substration processing method, two or more stimulable phosphor sheets carrying images at least partially different from each other stored therein, for example, before and after the injection of contrast media into an object, or the digital image signals obtained by reading out the images stored in the stimulable phosphor sheets are subjected to shift and/or rotation in order to correct a deviation in positions of the images. At this time, fine fringes recorded in one stimulable phosphor sheet interfere with the fine fringes recorded in another stimulable phosphor sheet. As a result, moiré fringes are

generated in a visible image finally reproduced by use of the digital image signals. The moiré fringes thus generated very adversely affect the diagnosis.

The aforesaid moiré fringes (moiré image interference fringes) are fringe-like diffraction images developed by a set of diffraction faces slightly different from one another in direction, grating constant, or the like. The moiré fringes sometimes appear also in electronic microscopes or the like. When two bodies having an equal fringe space (d) are inclined at an angle (α) with respect to each other or when two bodies having different fringe spaces (d and d + αd) are superposed in parallel to each other, the space (S) of the moiré fringes developed is expressed by the formula of $S = d/\alpha$. Therefore, the width of the dark sections of the moiré fringes becomes far larger than the original fringe space (d) and presents a very serious visual problem.

One method of preventing the moiré fringes from adversely affecting the image quality of a radiation image, particularly the diagnostic efficiency and accuracy of the radiation image is to adjust the space between the foil members of the grid with respect to the sampling frequency so as to form moiré fringes having such a low or high frequency that the moiré fringes cannot be visually sensed by human eyes (or the moiré fringes do not obstruct the diagnosis). In this method, however, when it is necessary to change the sampling frequency according to the size of the stimulable phosphor sheet, the grid must also be changed according to the sampling frequency. Therefore, this method is not suitable for practical purposes.

## SUMMARY OF THE INVENTION

The primary object of the present invention is to provide a high-speed image recording apparatus using stimulable phosphor sheets, which eliminates the generation of moiré fringes and thereby makes it possible to reproduce a visually sharp final image.

Another object of the present invention is to provide a high-speed image recording apparatus using stimulable phosphor sheets, which provides a high-quality image free from moiré fringes even in a subtraction processing system.

The specific object of the present invention is to provide a high-speed image recording apparatus using stimulable phosphor sheets, which automatically records radiation images.

The present invention provides a high-speed image recording apparatus using stimulable phosphor sheets for recording X-ray transmission images in which the stimulable phosphor sheets are sequentially moved to an image recording position for exposure to X-rays passing through an object, the X-ray transmission images of the objects are sequentially projected onto the stimulable phosphor sheets to have the X-ray transmission images stored therein, and then the stimulable phosphor sheets carrying the X-ray transmission images stored therein are sequentially moved out of the image recording position, wherein the improvement comprises providing a movable grid in said image recording position so as to intervene between said stimulable phosphor sheet and said object, and providing a means for moving said movable grid with respect to said stimulable phosphor sheet in parallel thereto in synchronization with the projection of said X-ray transmission image.

In the present invention, since the movable grid is moved in parallel to the stimulable phosphor sheet in synchronization with the projection of the X-ray transmission image, it does not happen that the direct X-rays passing through an object are intercepted with respect to a particular portion of the stimulable phosphor sheet all the time during the exposure. Therefore, fringes corresponding to the foil members of the grid are not recorded in the stimulable phosphor sheet, and there is no risk of moiré fringes being generated when the image stored in the stimulable phosphor sheet is read out by use of a radiation image read-out apparatus. Accordingly, it is possible to obtain a sharp final image.

Further, in the present invention, when image recording is conducted continuously at a high speed within the range of 0.5 sheet/second to 6 sheets/second and a subtraction processing is conducted in angiography, it is possible to remove the cause of moiré fringes adversely affecting the diagnosis and thereby to obtain a subtraction image having a high image quality.

Further, since the high-speed image recording apparatus using stimulable phosphor sheets in accordance with the present invention is provided with a system for synchronizing the drive mechanism for the movable grid and the conveying mechanism for the stimulable phosphor sheets with each other, the apparatus can automatically record X-ray transmission images at high speeds.

BRIEF DESCRIPTION OF THE DRAWINGS

Figure 1 is a sectional view showing a part of the movable grid used in the high-speed image recording apparatus in accordance with the present invention,

Figure 2 is a schematic view showing an embodiment of the high-speed image recording apparatus in accordance with the present invention,

Figures 3A, 3B, 3C, 3D and 3E are schematic views showing various embodiments of the movable grid drive mechanism used in the high-speed image recording apparatus in accordance with the present invention.

DESCRIPTION OF THE PREFERRED EMBODIMENTS

The present invention will hereinbelow be described in further detail with reference to the accompanying drawings.

Figure 2 schematically shows an embodiment of the high-speed image recording apparatus for X-ray transmission images in accordance with the present invention. In Figure 2, a high-speed image recording apparatus 1 comprises a first sheet receiving section 2 for receiving unused stimulable phosphor sheets, a second sheet receiving section 3 for receiving the stimulable phosphor sheets carrying X-ray transmission images stored therein, and a conveying mechanism for taking the stimulable phosphor sheets one by one out of the first sheet receiving section 2, sequentially conveying the stimulable phosphor sheets at high speeds to an image recording position, and then sequentially convey

the stimulable phosphor sheets carrying X-ray transmission images stored therein to the second sheet receiving section.

Further, in the high-speed image recording apparatus 1, a movable grid 4 is mounted in the image recording position so that the movable grid 4 intervenes between the stimulable phosphor sheet 5 fed to the image recording section and an object 20. There is also provided a drive means for moving the movable grid 4 in parallel to the stimulable phosphor sheet 5 in synchronization with the exposure to X-rays.

In the first sheet receiving section 2, a plurality of unused stimulable phosphor sheets 5a, 5b, 5c, ... are loaded in the bare form or in the form housed respectively in cassettes. (The stimulable phosphor sheets in both forms are generically called stimulable phosphor sheets.) When image recording is conducted, the power of a motor 6 is transmitted to a conveying roller 8 via a clutch 7. Since the conveying roller 8 and guide rollers 9a to 9e are engaged with an endless conveyer belt 10, the conveyer belt 10 is moved in the direction of the arrow when the conveying roller 8 is rotated by the motor 6. Then, when a solenoid 11 is energized, a pressing piece 12 is activated to contact the conveyer belt 10 with the first stimulable phosphor sheet 5a among the stimulable phosphor sheets 5a, 5b, 5c, ...

loaded in the first sheet receiving section 2. At this time, the conveyer belt 10 releasably grasps, attracts or sucks the stimulable phosphor sheet 5a. For this purpose, for example, the conveyer belt 10 may be provided with clamping claws for engagement with clamping pieces provided on the stimulable phosphor sheets, or may be provided with adhesive tapes. Alternatively, the conveyer belt 10 may be provided with female or male tapes of the face-to-face fastener type, and male or female tapes of this type may be provided on the stimulable phosphor sheets. Also, the conveyer belt 10 may be constructed to magnetically attract the stimulable phosphor sheets one by one.

When the stimulable phosphor sheet 5 is grasped, attracted or sucked as described above by the conveyer belt 10 and conveyed to the image recording position, a limit switch 13 detects the arrival of the stimulable phosphor sheet 5, and the detection signal of the limit switch 13 is sent to a control section 14' in the apparatus. As a result, the clutch 7 is disengaged from the rotation of the motor 6, and a brake (not shown) is activated to stop the movement of the conveyer belt 10. Then, X-rays are emitted from an X-ray generator 19 according to an instruction given by a control section 14 connected to the aforesaid control section 14' in the apparatus, and an image of the X-rays passing through the object 20 is projected onto the stimulable phosphor sheet 5 temporarily stopped as described above in the image recording position.

At the step of projecting the X-ray transmission image onto the stimulable phosphor sheet 5, a means for driving the movable grid 4 is activated in synchronization with the timing of image projection in a sequence programmed in advance in the control section 14.  For this purpose, in this embodiment, the movable grid 4 is hung from the body of the high-speed image recording apparatus via leaf springs 16a and 16b mounted on two opposed end portions of the movable grid 4, and a protrusion 17 of an iron core and a solenoid 15 for the iron core are positioned on another end portion of the movable grid 4.  Before an X-ray transmission image is projected onto the stimulable phosphor sheet 5, the solenoid 15 is energized by the signal sent from the control section 14 to attract the protrusion 17 of the iron core, thereby to hold the movable grid 4 at the start point of movement.  A predetermined time before the projection start signal is generated, a signal for releasing the movable grid 4 is sent to the solenoid 15 to have the movable grid 4 moved by the force of the leaf springs 16a and 16b.  This operation is conducted each time an X-ray transmission image is projected onto the stimulable phosphor sheet. (Alternatively, the projection start signal may be sent to the X-ray generator 19 a predetermined time after the releasing signal is sent to the solenoid 15.)  As described above, the movement of movable grid 4 should preferably be started a predetermined time before each image projection step is started, and then the movable grid 4 is held at the start point of movement after each image projection step is finished.  However, it is also possible to continuously move the movable grid 4 during many image projection steps.

As described above, most of the direct X-rays D passing through the object 20 and carrying the effective image information of the object 20 pass through the movable grid 4 and impinges upon the stimulable phosphor sheet 5 positioned just below the movable grid 4.  On the other hand, most the X-rays S scattered by the object 20 are intercepted by the movable grid 4.  Further, since the movable grid 4 is moved in synchronization with the recording of the X-ray transmission image, no fine fringe is projected onto the stimulable phosphor sheet 5.  Therefore, there is no risk of moiré fringes being generated in a final image reproduced by reading out the image stored in the stimulable phosphor sheet 5 by use of a radiation image read-out apparatus.

When the step of exposure to X-rays is completed, the brake (not shown) is released by a completion signal, and the clutch 7 is connected to the motor 6.  In this manner, the second unused stimulable phosphor sheet 5b is conveyed to the image recording section and, at the same time, the stimulable phosphor sheet 5 carrying the X-ray transmission image stored therein is conveyed from the image recording section to the second sheet receiving section 3.  At this time, the stimulable phosphor sheet 5 is disengaged from the conveyer belt 10 by a member 21 for releasing the grasping, attraction or sucking engagement between the stimulable phosphor sheet 5 and the conveyer belt 10, and then loaded into the second sheet receiving section 3.

Also, during this time, the movable grid 4 is attracted by the solenoid 15 for the next image recording step.

The high-speed image recording apparatus may further be provided with a combination 22 of an X-ray image intensifier with a television camera in the position indicated by the chain line in Figure 2, so that the fluoroscopy can be conducted. Also, when a stimulable phosphor layer or stimulable phosphor layers are overlaid on the surface of the conveyer belt 10, instead of using the stimulable phosphor sheets, there become unnecessary the means for engagement of the conveyer belt 10 with the stimulable phosphor sheets, the solenoid 11 and the pressing piece 12.

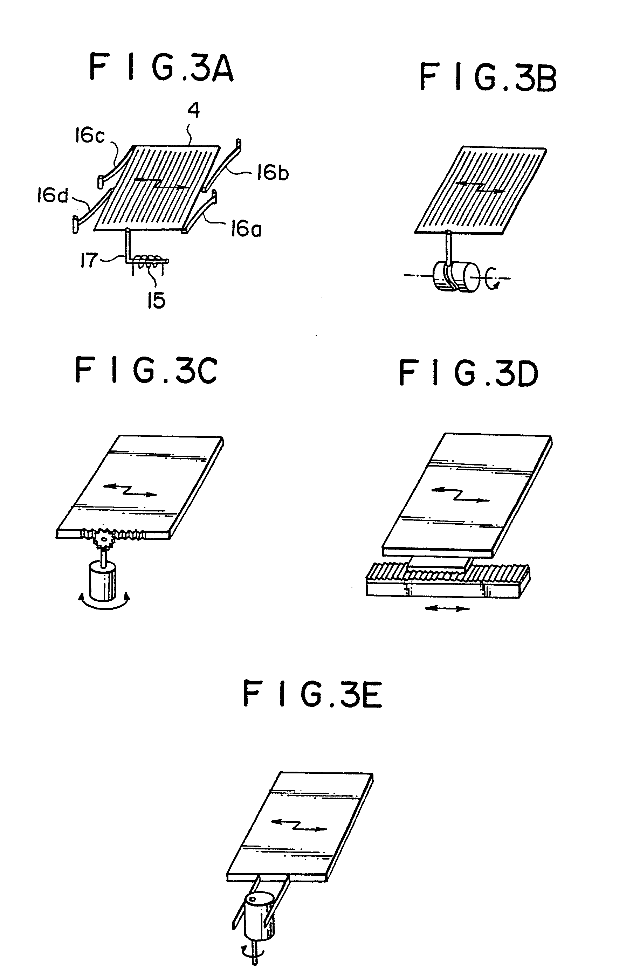

As the means for driving the movable grid 4, it is also possible to use a cam mechanism as shown in Figure 3B, a combination of a DC servo motor or a stepping motor with a rack-and-pinion mechanism as shown in Figure 3C, a linear motor mechanism as shown in Figure 3D, or an eccentric motor as shown in Figure 3E.

The movable grid 4 may be moved in any direction insofar as the generation of the fringes can be eliminated. However, when a grid having many foil members positioned in parallel to one another (of the type usually called the Lysholm Blende and as shown in Figure 1) is used, the grid should preferably be moved in the direction normal to the longitudinal direction of the foil members (i.e. in the direction of the double directed arrow shown in Figure 1). Also, when a grid having grating-like foil members and generally called a cross grid is used, the cross grid is swung in the direction of the diagonal line of the grating.

Or, the cross grid is made in the sector (fan-like) form, positioned above the stimulable phosphor sheet in parallel thereto, and rotated and reciprocated in parallel to the stimulable phosphor sheet around the rivet portion of the sector. In this case, if the center of rotation is positioned above the stimulable phosphor sheet, there is a risk of moiré fringes being generated at a portion of the stimulable phosphor sheet corresponding to the center of rotation of the cross grid. Therefore, the center of rotation of the cross grid should be positioned outside the stimulable phosphor sheet.

In synchronization with the projection of the X-ray transmission image onto the stimulable phosphor sheet conveyed to the image recording position, the movable grid 4 is moved over a distance at least several times the space between the foil members of the movable grid 4 within the image projection time. Theoretically, generation of moiré fringes can be eliminated when the movable grid 4 is moved a distance corresponding to one pitch of the foil members during the exposure to X-rays. However, since the foil members are usually positioned in an amount within the range of 2.8 to 5.7 pcs./mm, the time required for the grid to move a distance corresponding to one pitch of the foil members becomes shorter than the exposure time. Further, it is not always possible to accurately move the grid a distance corresponding to one pitch of the foil members. In the experiments conducted by the inventors, satisfactory results were obtained when the movable grid 4 was moved a distance corresponding to five or six pitches of the foil members.

# C L A I M S

1. A high-speed image recording apparatus using stimulable phosphor sheets for recording X-ray transmission images in which the stimulable phosphor sheets are sequentially moved to an image recording position for exposure to X-rays passing through an object, the X-ray transmission images of the objects are sequentially projected onto the stimulable phosphor sheets to have the X-ray transmission images stored therein, and then the stimulable phosphor sheets carrying the X-ray transmission images stored therein are sequentially moved out of the image recording position, wherein the improvement comprises providing a movable grid in said image recording position so as to intervene between said stimulable phosphor sheet and said object, and providing a means for moving said movable grid with respect to said stimulable phosphor sheet in parallel thereto in synchronization with the projection of said X-ray transmission image..

2. An apparatus as defined in Claim 1 wherein, when said movable grid is moved in synchronization with the projection of said X-ray transmission image, a signal for commanding the movement of said grid is generated a predetermined time before a signal for commanding the projection of said X-ray transmission image is generated.

3. An apparatus as defined in Claim 1 wherein said means for moving said movable grid comprises leaf springs mounted on two opposite end portions of said movable grid, and a combination of an iron core and a solenoid positioned at another end portion of said movable grid.

4.  An apparatus as defined in Claim 1 wherein said means for moving said movable grid comprises a cam mechanism positioned at an end portion of said movable grid.

5.  An apparatus as defined in Claim 1 wherein said means for moving said movable grid comprises a combination of a DC servo motor or a stepping motor with a rack-and-pinion mechanism positioned at an end portion of said movable grid.

6.  An apparatus as defined in Claim 1 wherein said means for moving said movable grid comprises a linear motor mechanism positioned at an end portion of said movable grid.

7.  An apparatus as defined in Claim 1 wherein said means for moving said movable grid comprises an eccentric motor positioned at an end portion of said movable grid.

8.  An apparatus as defined in Claim 1 wherein said stimulable phosphor sheets are sequentially moved to and out of the image recording position by use of an endless belt provided with a means for releasably holding said stimulable phosphor sheets.

# F I G . I

MOVING DIRECTION
OF MOVABLE GRID

# F I G . 2

## F I G.3A

## F I G.3B

## F I G.3C

## F I G.3D

## F I G.3E

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| E | EP-A-0 077 676  (FUJI PHOTO FILM CO., LTD.) * Abstract; page 7, line 24 - page 9, line 18; page 11, line 8 - page 12, line 17; page 12, line 26 - page 13, line 3, lines 15-19 * | 1,8 | G 01 T   1/29 |
| A | US-A-2 938 120  (FORSYTH) * Column 1, lines 15-53; column 3, lines 7-42, 51-75; column 6, line 22 - column 8, line 53; claim 1; figures * | 1-3,5 | |
| A | GB-A- 802 754  (PICKER X-RAY CORP.) * Page 1, lines 17-30; page 2, line 51 - page 3, line 8; figures * | 1,2,4 | |
| A | US-A-2 467 592  (MORGAN & HODGES) * Column 1, line 37 - column 3, line 18; figures * | 4,6 | TECHNICAL FIELDS SEARCHED (Int. Cl. ³) G 01 T G 21 K |
| A,D | US-A-4 258 264  (KOTERA et al.) * Abstract; column 2, line 20 - column 3, line 22; figures 5-7,10 * | 1 | |

The present search report has been drawn up for all claims

| Place of search THE HAGUE | Date of completion of the search 18-04-1984 | Examiner DATTA S. |
|---|---|---|